# EUROPEAN PATENT SPECIFICATION

(11) **EP 3 301 422 B1**
(45) Date of publication and mention of the grant of the patent: **08.04.2020**
(21) Application number: 17169110.8
(22) Date of filing: 02.05.2017
(51) Int. Cl.: G01L 1/22, B66C 1/66, B66C 13/16, G01G 3/14, G01G 19/18

(54) **TWIST-LOCK TYPE ELEMENT FOR LOCKING AND WEIGHTING, RELATED METHOD OF MANUFACTURING AND DEVICE FOR LIFTING AND WEIGHTING**
ELEMENT DE TYPE VERROU TOURNANT POUR VERROUILLAGE ET PESAGE, PROCEDE DE FABRICATION ASSOCIE ET DISPOSITIF DE LEVAGE ET DE PESAGE
RIEGELBOLZEN-TYP ELEMENT ZUM VERRIEGELN UND WIEGEN, VERWANDTE VERFAHREN ZUR HERSTELLUNG UND VORRICHTUNG ZUM HEBEN UND WIEGEN

(30) Priority: 03.10.2016 IT 201600098884
(43) Date of publication of application: 04.04.2018
(73) Proprietor: Eurobil s.r.l., 21013 Gallarate (VA) (IT); Sensocar S.A., 08228 Terrassa, Barcelona (ES)
(72) Inventor: Balzi, Roberto, 21012 Cassano Magnago VA (IT); Teixidó Satorres, Ramón, 08221 Terrassa, Barcelona (ES)
(74) Representative: Barbaro, Gaetano

(56) References cited:
- WO-A1-2012/042464
- US-A- 4 733 571
- US-A- 5 429 007
- US-A1- 2016 161 348

## Description

### TECHNICAL FIELD

This disclosure relates to weighting devices of suspended loads and more particularly a twist-lock type element for locking and weighting having a load cell suitable for weighting suspended loads, a related method of manufacturing the element as a single piece and a device for lifting and weighting containers.

### BACKGROUND OF THE INVENTION

The elements for locking and lifting containers, for example when charging or discharging them from a ship, are known as "twist-locks".

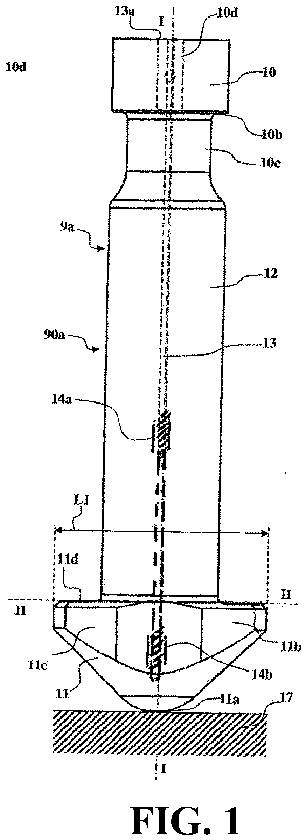

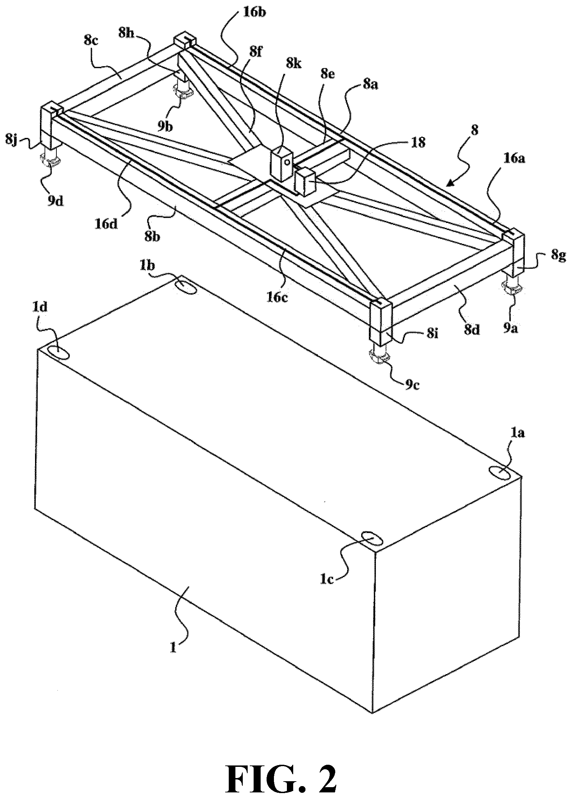

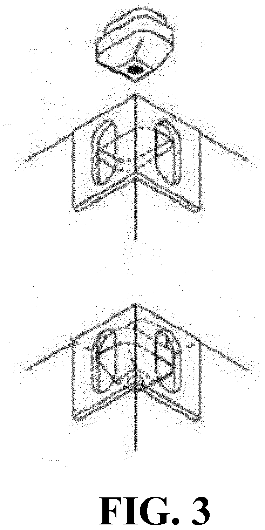

An example of a twist-lock element incorporating also a traction force sensor is illustrated in Figure 1 and is disclosed in the International Patent Application WO2012/042464. It is essentially composed of a cylindrical body ending with an arrow-shaped anchor head. As shown in Figure 2, taken from the patent document cited above, the containers are locked and raised by means of a lifting device consisting of a lifting frame, commonly referred to as a "spreader", below which four/eight coupling twist-lock elements are installed. Standard containers have oblong openings at their corners, which are suitably reinforced for withstanding the weight of a full container. The anchor heads of the twist-lock coupling elements are tucked in the oblong openings, as shown in Figure 3, and then rotated by 90° around their axis so as to be trapped in the respective openings and to allow to lift the container.

The known locking element of Figure 1 has a blind axial hole, longitudinally defined to the body of the twist-lock, intended to receive at least a proximal traction sensor, labeled by the reference 14a, for measuring an axial strain force, and a distal compression sensor 14b, for sensing a compression force on the anchor head. Typically, the used sensors are based on a Bragg-type lattice connected to an optical fiber, installed in the axial channel that crosses longitudinally the twist-lock.

The prior locking elements of Figure 1 allow to weight lifted containers, but with an accuracy which, according to the laws in force, is too coarse. Moreover, they require an axial channel for inserting the sensors 14a and 14b through the coupling element up to the anchor head, thus these twist locks are purposely manufactured.

The document US2016/161348 discloses a force transducer for measuring tension forces, that comprises a rod-shaped deformation body and strain transducers applied thereon.

The document US5429007 discloses a tension load cell apparatus including a structural member of metallic construction having a pair of large diameter end portions and a smalled diameter center portion, with strain gauges applied on the center portion.

The document US4733571 discloses a column type load cell having recessed portions on opposite sides to receive strain gauges.

### SUMMARY OF THE INVENTION

Studies performed by the applicant about why the accuracy of weight measurements carried out with twist-lock elements for lifting and weighting cannot be refined, led to conclude that a cause may be the fact that known twist-locks have a substantially solid structure and thus are subjected to minimal axial stretches. As a consequence, even using traction sensors based on a Bragg lattice, which are among the most sensitive and expensive sensors presently available on the market, it is difficult to weight a container with the refined accuracy required by the rules recently come into force.

These problems are solved with the twist-lock type elements of this disclosure for locking and weighing as defined in the appended claims. They have a load cell having a longitudinal body on which at least one strain gauge is installed. The longitudinal body is configured to elastically elongate to a greater extent than the twist-lock stem under the same traction force.

According to one embodiment, the longitudinal body of the load cell is perforated transversely to the longitudinal direction of the twist-lock.

According to another embodiment, the longitudinal body is shaped like a column having a reduced cross section to the longitudinal direction, of the twist-lock, with respect to the cross section of the cylindrical stem.

The twist-lock element for locking and weighting of this disclosure can be realized as a single piece element starting from a common twist-lock element without a load cell, with the method for manufacturing of this disclosure.

It is also disclosed a weighting apparatus comprising a lifting frame, commonly referred to as a "spreader", on which at least four twist-lock elements of this disclosure for lifting and weighting are securely installed.

The claims as filed are integral part of this disclosure and are herein incorporated by reference.

### BRIEF DESCRIPTION OF THE DRAWINGS

Figure 1 depicts a prior twist-lock type with a central axial cavity and traction/compression sensors installed therein.
Figure 2 depicts a device for lifting containers having four locking elements shown in figure 1.
Figure 3 illustrates two locking phases of a twist-lock to an angle of a container.
Figure 4 depicts a twist-lock type element for weighting according to this disclosure equipped with a load cell.
Figure 5 shows three parts of a twist-lock elements of this disclosure for weighting, namely: A) three types of locking tails of a twist-lock for locking to a spreader; B) front and side views of the load cells as a central part of the twist-lock; C) three types of arrow shaped heads as locking points to containers to be lifted and weighted.
Figures 6A and 6B are front and side views of the machined area for realizing the load cell for an element for locking and weighting according to an embodiment of this disclosure.
Figures 7A and 7B are front and side views of the load cell of figures 6A and 6B on which a strain gauge is installed.
Figure 8A, 8B and 8C show a front view, a side view partially in trasparence and an axonometry view of a an element for locking and weighting accordinf to this disclosure.
Figures 9A and 9B are front and side views of the load cell of an element for locking and weighting according to another embodiment of this disclosure.
Figure 10A and 10B are front and side views of the load cell of figures 9A and 9B on which a strain gauge is installed.
Figures 11A, 11B and 11C show the element for locking and weighting of figures 9A and 9B in axonometry with a visible load cell, with a load cell protected by a tubular element, and a detail view of the locking tail and of the load cell shielded by the tubular element.
Figure 12 shows an enlarged view of the load cell of the weighting device shown in figure 4 containing strain gauges disposed along different orientations.
Figures 13A and 13B depict exemplary electrical schemes, respectively for an analog circuit and for a digital circuit configured as a Wheatstone bridge, for reading the resistance of a strain gauge installed in the load cell of a twist-lock type element for locking and weighting according to this disclosure.
Figures 14A, 14B and 14C show locking elements of this disclosure with different tails for locking to a spreader.
Figure 15 shows a "spreader", for lifting containers, below which the twist-lock type elements for locking and weighting of this disclosure may be installed.

### DETAILED DESCRIPTION

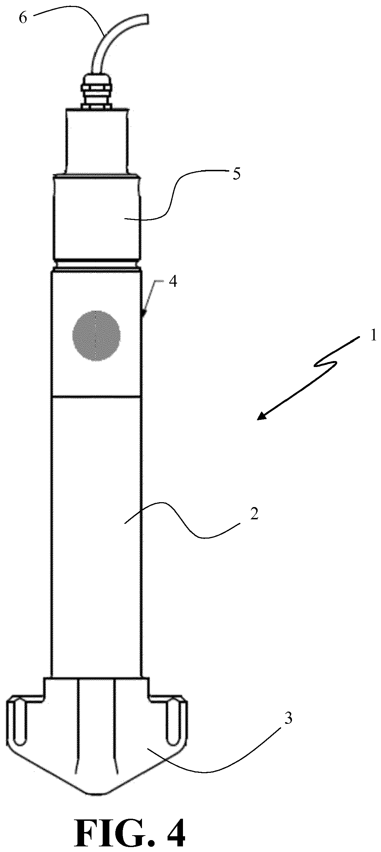

A basic diagram of a twist-lock type element for locking and weighting 1 according to this disclosure is illustrated in figure 4. As the common twist-lock type locking elements, it has a solid cylindrical stem 2 ending with an arrow shaped head 3, suitable for entering into a blind hole of a reinforced corner of a container and to remain trapped in it by rotating by a right angle, as shown in figure 3.

Differently from the known twist-lock coupling element of figure 1, it has no axial hole throughout the stem 2 for accommodating a traction sensor, but it has a load cell 4 positioned at the end of the stem 2 opposed to the head 3. A tail 5 for locking to a spreader for containers is secured to the loading cell 4. When the twist-lock of Figure 4 is locked to a container and is lifting it, the load cell is tied to the spreader through the tail 5 and is subject to a traction force due to the weight of the container. An electric wire 6 runs through the tail 5 and is connected to the load cell 4 so that the value of the traction force detected on the twist-lock can be read.

The locking element of this disclosure has a much greater accuracy than that of the prior element for locking and weighting of figure 1. The applicant noticed that one cause of the poor accuracy of the twist-lock locking element of figure 1 may reside in the fact that the cross section of the stem is substantially equal to that of a similar twist-lock with a solid stem. This is because the axial cavity only has to accommodate a fiber optic and a traction sensor based on a Bragg lattice, and because it is considered undesirable to weaken the twist-lock for safety reasons. As a consequence, the shape of the twist-lock stem of Figure 1 stretches slightly, essentially as the common twist-locks elements without traction sensors, and the indication given by the Bragg lattice is inaccurate because the lattice is subjected to tiny stretches. Moreover, fabricating a twist-lock with a stem axially perforated up to the arrow shaped head and embedding a Bragg lattice sensor in the narrow axial hole are difficult and expensive operations.

In the twist-lock type element for locking and weighting of this disclosure, the loading cell 4 is substantially composed of at least one strain gauge mounted on a longitudinal body 8 shaped so as to elastically deform itself more than the stem 2 subjected to the same traction force, but being able to withstand the maximum nominal force of twist-lock 1 without plastic deformation. This can be achieved, for example, by drilling or digging the longitudinal body 8 of the load cell in a transverse direction or by tapering it with respect to the stem 2. In both cases, the longitudinal body will elastically extend longer than the stem 2 as it will have a reduced cross section, being in any case able to withstand the maximum nominal traction force contemplated for the twist-lock 1.

For this reason, a low cost strain gauge installed on the longitudinal body 8 will be subjected to significant stretches and may give a particularly accurate detection. By contrast, in the known locking element of figure 1, the traction sensor 14a is subjected to relatively small elongations because of the stiffness of the stem 2, thus giving unacceptably coarse indications even if the sensor is a fiber optic sensor, which is more expensive than any strain gauge.

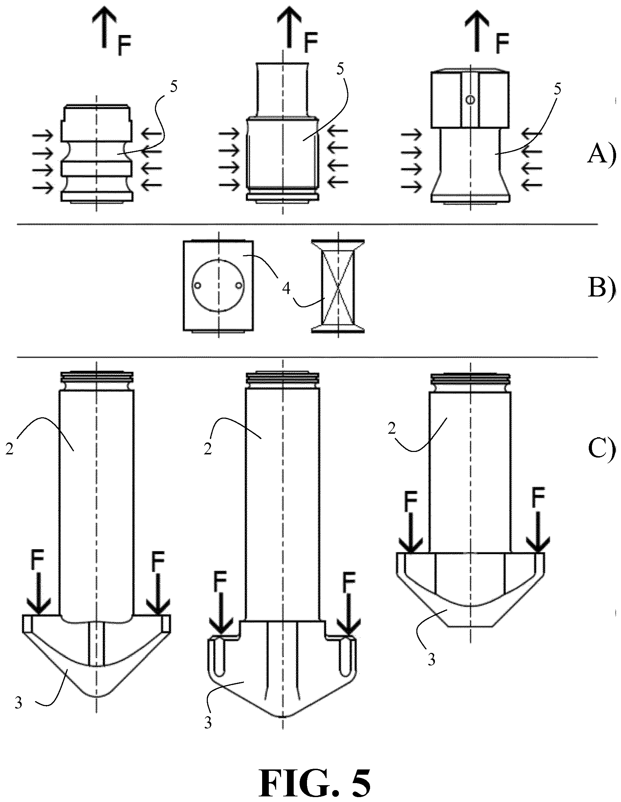

The element for locking and weighting 1 according to this disclosure may also be shaped differently from the one shown in Figure 4. Depending on the type of spreader for container:
- the tail 5 may have different shapes, as shown in figure 5A;
- the load cell 4 may be composed of a sensor mounted on a longitudinal body 8, weakened in a controlled manner by means of a hole or manufactured in the form of a uniformly thinned column having a cross section smaller than that of the tail 5 and of the stem 2, as shown in figure 5B;
- the stem 2 may have a different longitudinal length and the arrow shaped head 3 may be shaped in various ways (Figure 5C) to be inserted into a respective blind hole of a reinforced corner of a container.

According to one embodiment, the tail 5, the longitudinal body 8 of the load cell 4 and the stem 2 are distinct pieces that are welded to each other or secured by means of a thread coupling to form the twist-lock of this disclosure. According to another embodiment, the stem 2, the longitudinal body 8 of the load cell 4 and the tail 5 are integral to each other and are obtained by mechanical machining a single-piece element. The tail 5 may also be integral with the longitudinal body 8 of the load cell 4, or it may be welded thereto.

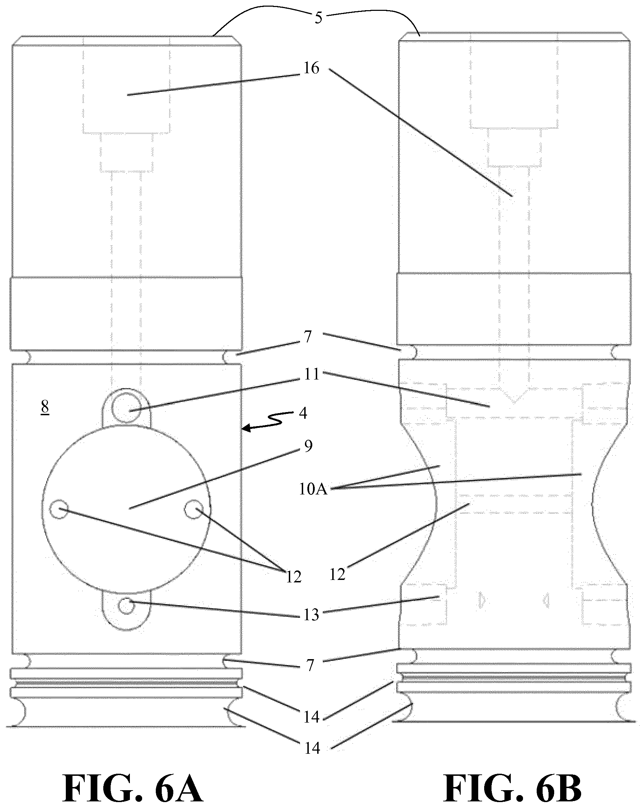

Figures 6A and 6B are front and semi-transparent profile views of a locking tail 5 fixed to a load cell 4. In the shown embodiment, the tail 5 has a passing coaxial cavity 16 for passing a cable of electrical connection 6 of the load cell with the outside. With this arrangement, the electrical connection cable 6 remains protected within the tail 5 and does not interfere with the gripping by the spreader.

Even if the locking element were constructed as a single-piece element, it would be relatively easy to realize the cavity 16 because it passes throughout the locking element of this disclosure only for a relatively short portion (the length of the tail 5). Moreover, no sensor must be engaged into the cavity 16, as is the case in the known locking element of Figure 1, but only the electrical wires for connection to the load cell 4 must be threaded, and this does not pose any difficulty.

Preferably, between the load cell 4 and the tail 5 and the stem 2 there are shrinkages 7 for concentrating the tension on the twist-lock 1 axis.

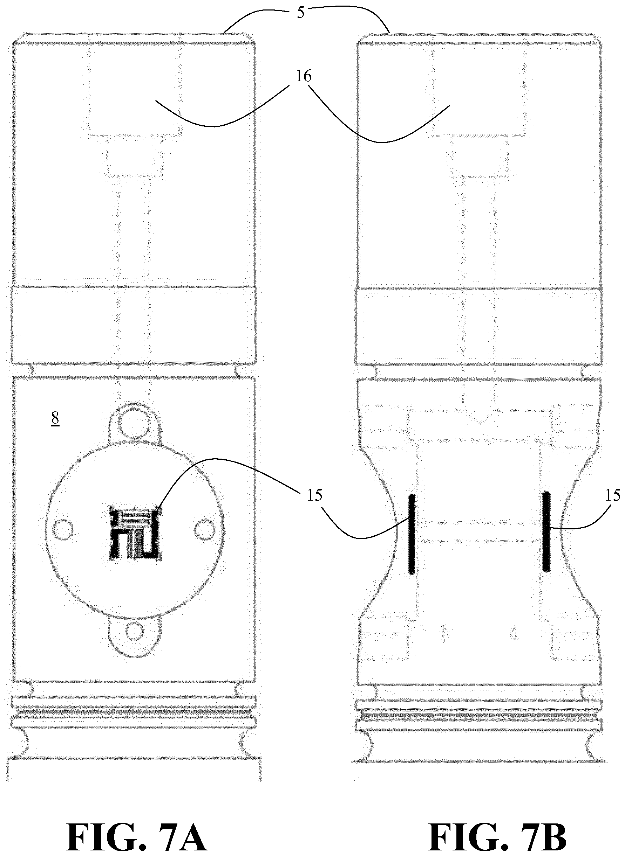

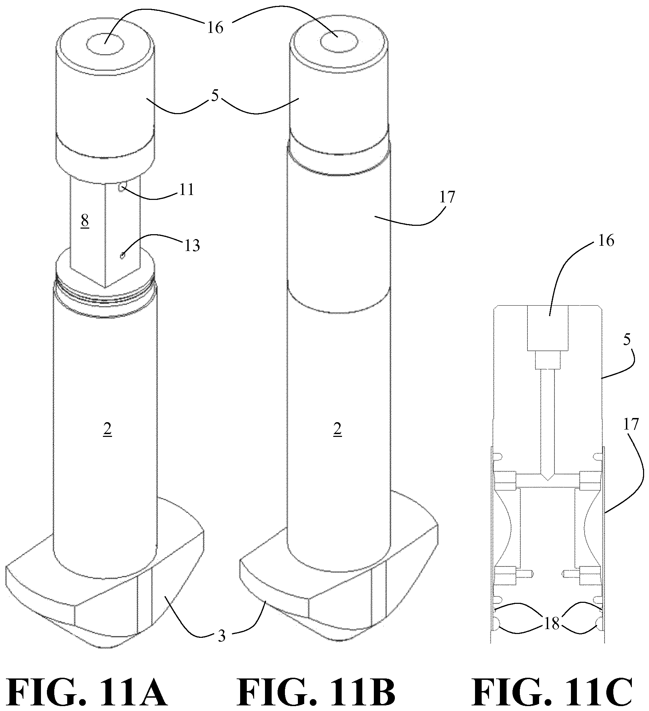

The longitudinal body 8 of the load cell has a reduced section with respect to the stem 2 (not shown in Figure 7) and, in the illustrated exemplified embodiment, thereupon there are two deformation plates 9 mounted at opposite sides, on which strain gauges 15 (shown in Figures 7A and 7B) will be installed so as to deform together with the longitudinal body 8. Such plates 9 will be installed in housings 10A obtained in the thickness of the longitudinal body 8. In order to allow an electrical connection of the strain gauges 15 to each other and with the outside, there will be holes 11, 12 and 13 in the longitudinal body 8. In the embodiment of figures 6A and 6B, grooves 14 are also provided for locking, by means of shape engagement, a tubular 17 (figure 11C) for shielding and protecting the load cell 4.

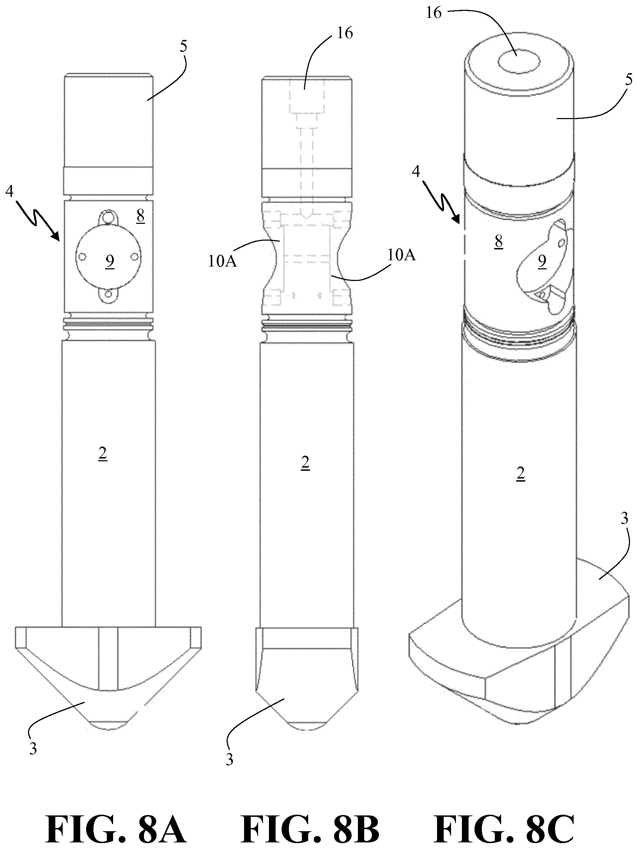

Figures 8A, 8B and 8C show different views of a twist-lock type element for locking and weighting of this disclosure, with the tail 5 and the load cell 4 shown in Figures 6 and 7. The tubular 17 for covering the load cell 4 has not been shown so as to leave visible a plate 9 installed in the respective housing 10A obtained in the longitudinal body 8.

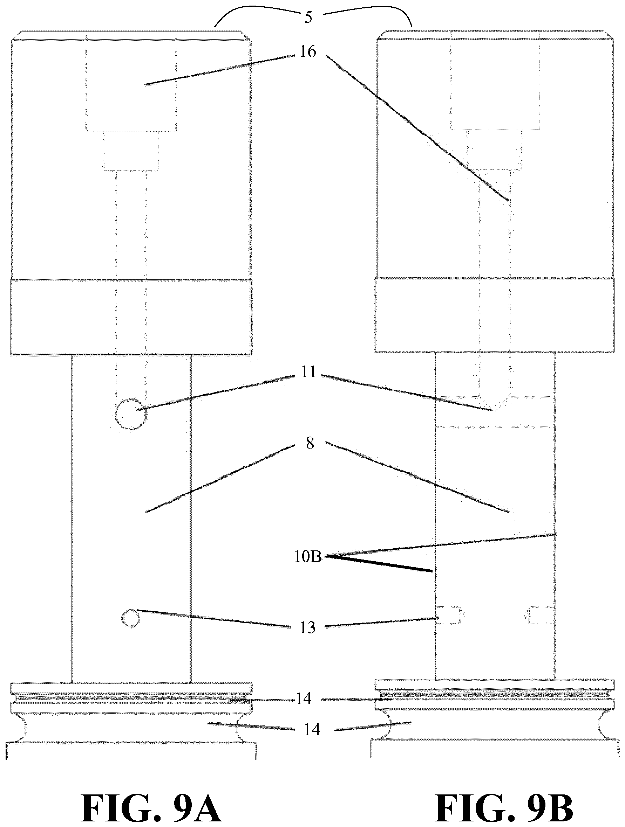

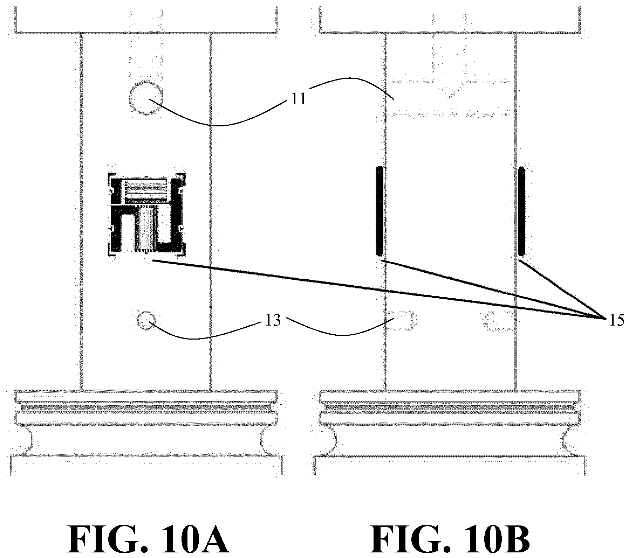

Figures 9 and 10 are similar to figures 6 and 7 and show some details of another embodiment of the twist-lock type element for locking and weighting 1 of this disclosure. Differently from the embodiment of figures 6 and 7, the longitudinal body 8 is a column thinned substantially along its length and the strain gauges 15 are directly applied on opposite walls 10B of the longitudinal body 8 itself. Figures 11A and 11B are views in axonometry of the twist-lock type element for locking and weighting 1, respectively without and with the tubular 17 for shielding and protecting the load cell 4. This tubular 17, shown in figure 11C, has sealing rings 18 protruding inwardly and configured to engage in grooves 14 for preventing any accidental slipping.

It is convenient to make the locking element of this disclosure as a single piece because it can be obtained by machining (for example, lathe) twist-lock type elements already on the market. More in detail, starting from a common twist-lock type locking element without a load cell, a limited portion thereof close to the tail 5 may be thinned to form the longitudinal body 8 and the tail 5 is pierced so as to realize the cavity 16. Then, at least one strain gauge is installed on the longitudinal body 8 so as to undergo to the same deformations to which the body 8 is subjected, the electrical connection wires of the strain gauges are threaded through the cavity 16 and the load cell 4 is protected by threading the tubular 17 from the tail side 5 and by welding it at the rings 18. Preferably but not necessarily, the welding is performed by a laser.

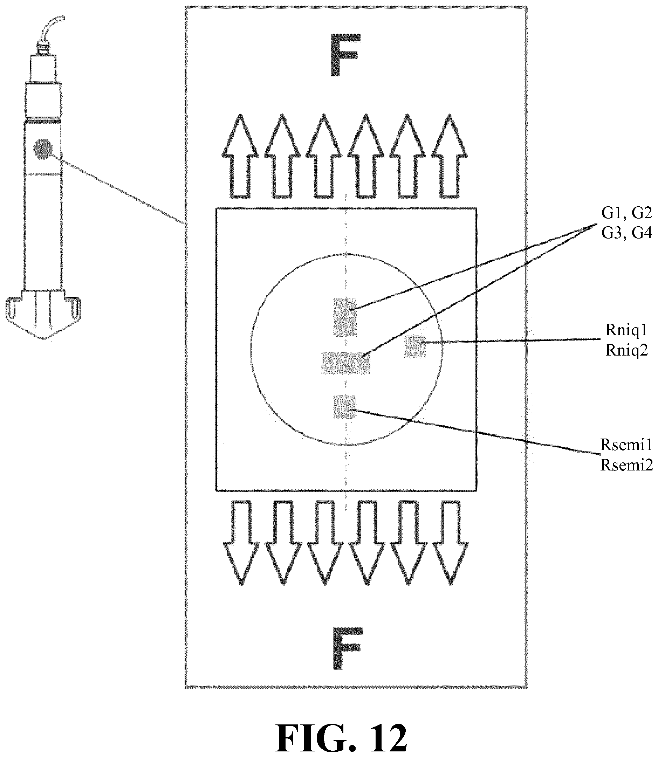

Figure 12 is an enlarged view of a load of an exemplary configuration of a load cell 4 for sensing a traction force F. According to the illustrated embodiment, the load cell 4 has four G1, G2, G3 and G4 strain gauges oriented at 90° and arranged in correspondence with a centerline plane of the cell to measure a traction force F that is coaxial to the cell 4. Conveniently, the loading cell 4 also has two semi-conducting strips Rsemi1 and Rsemi2, also installed at the centerline plane, for compensating for any non-linearity of the stress-strain characteristic of strain gauges, as well as two Rniq1 and Rniq2 bands, preferably made of nickel, to correct errors due to operating temperature fluctuations.

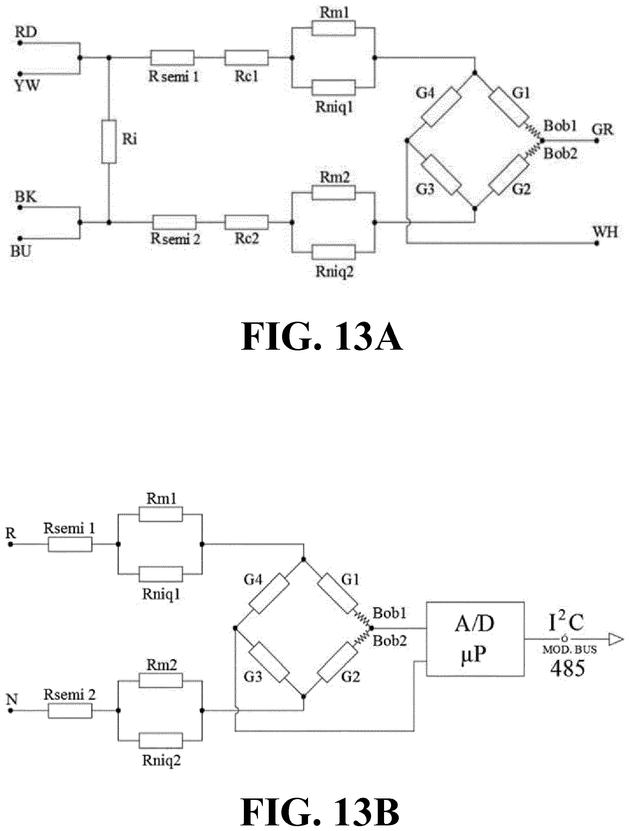

Figures 13A and 13B show respectively an analog circuit and a Wheatstone bridge digital circuit for reading resistance fluctuations of the strain gauges G1, G2, G3 and G4. The meaning of the used symbols is summarized in the following table:

| | |
|---|---|
| RD | supply + |
| YW | reference + |
| BK | supply - |
| BU | reference - |
| Ri | input resistance |
| Rsemi1, Rsemi2 | linearization resistances |
| Rc1, Rc2 | calibration resistances |
| Rm1, Rm2 | temperature compensation resistances |
| Rniq1, Rniq2 | temperature compensation resistances |
| G1, G2, G3, G4 | strain gauges |
| Bob1, Bob2 | zero temperature compensation resistances |
| GR | signal + |
| WH | signal - |
| R | supply + |
| N | supply - |
| A/D µP | microprocessor |

The electric diagram depicted in Figures 13A and 13B is a Wheatstone bridge. It is well known, to the skilled persons, for reading the electrical resistance of strain gauges and hence its functioning will not be further illustrated.

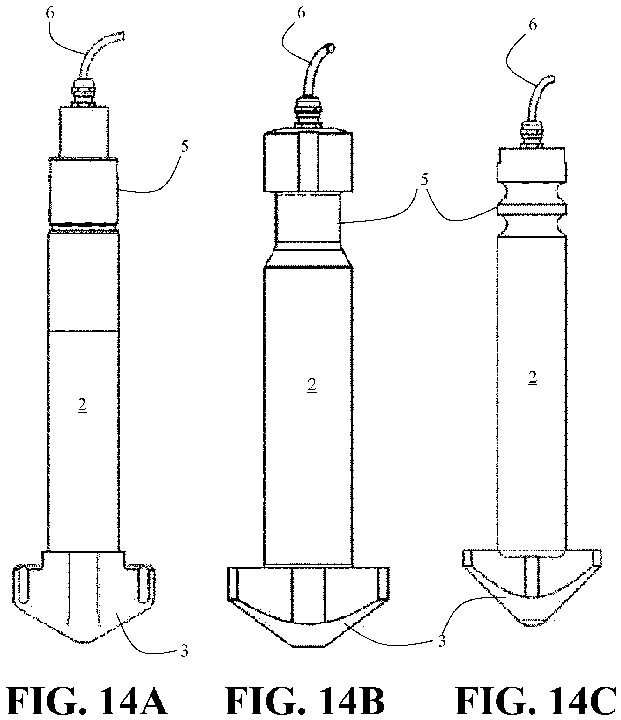

Figures 14A, 14B and 14C show three different embodiments of twist-lock type elements of this disclosure for locking and weighing, as they appear when assembled. The shape of the arrow shaped heads 3, the length of the stems 2, the shape of the tails 5 may be changed depending on the spreader and/or on the load to be lifted and/or on the standard used for the blind holes of the container.

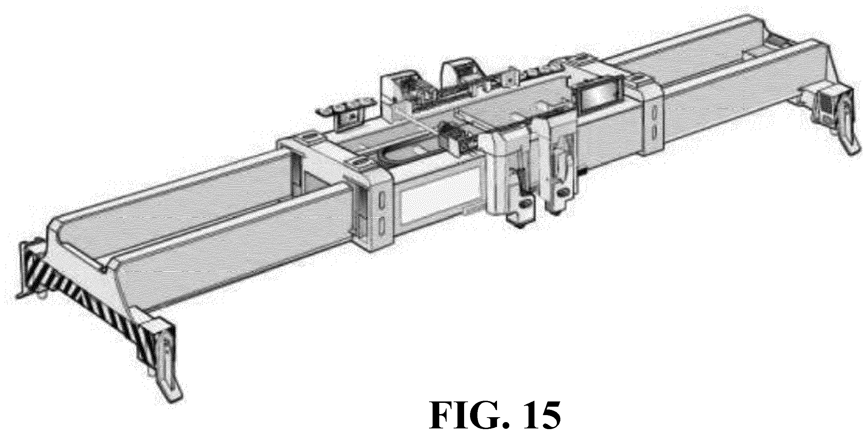

The locking elements of this disclosure may be mounted below a spreader, for example of the type shown in figure 15, so that the spreader supports the elements for locking and lifting by tightening them on the side wall of the respective holes 5 and passing the wire 6 along the spreader itself until it arrives at a control unit which controls the handling of the spreader. When a container is locked to the spreader via the twist-lock 1 of this disclosure, the control unit adjusts the inclination of the spreader so that the lifted container is horizontal and only then it reads the resistance of the strain gauges 15 of the four twist-locks 1 of this disclosure, in order to determine the weight of the container.

## Claims

1. A twist-lock type element (1) for locking and weighting containers, comprising:
a stem (2) having at a first end with an arrow shaped head (3) of a twist-lock type;
a load cell (4) comprising:
- a longitudinal body (8) having a first end coaxially fixed to a second end of the stem (2) opposed to the arrow shaped head (3), configured for withstanding a maximum nominal traction force and for elastically stretching itself in a greater measure than said stem (2),
- at least a strain gauge (15) fixed on a wall of said longitudinal body (8) so as to sense an axial traction force of the element (1) for locking and weighting;
a locking tail (5) suitable for a spreader for lifting containers, fixed at a second end of said longitudinal body (8) opposite to said first end.

2. The twist-lock type element (1) for locking and weighting according to claim 1, wherein said load cell comprises a plurality of strain gauges fixed to said longitudinal body for sensing traction and shear forces on the element.

3. The twist-lock type element (1) for locking and weighting according to claim 1 or 2, wherein said longitudinal body has a transversal hole to said longitudinal axis, said at least one strain gauge being fixed onto a wall of said transversal hole.

4. The twist-lock type element (1) for locking and weighting according to one of claims from 1 to 3, wherein said longitudinal body has a thinner transversal section than the transversal section of the cylindrical stem, said at least one strain gauge being fixed on a side wall of the longitudinal body.

5. The twist-lock type element (1) for locking and weighting according to one of claims from 1 to 4, comprising a tube (17) fixed to the stem (2) and to the locking tail (5) for surrounding the load cell (4).

6. The twist-lock type element (1) for locking and weighting according to one of claims from 1 to 5, wherein said locking tail has an axial cavity (16) open towards the outside and configured for housing electric connection wires of the load cell (4) with the outside.

7. A device for lifting and weighting containers, comprising:
a spreader having four or eight locking seats suitable for holding tails of twist-lock type elements;
four or eight twist-lock type elements (1) for locking and weighting according to one of claims from 1 to 6, having tails (5) firmly installed in the respective locking seats of the spreader.

8. The device according to claim 7, comprising a control circuitry electrically connected to the strain gauges (15) of the load cells of the twist-lock type elements (1) for locking and weighting, configured for reading a value of electric resistance of the strain gauges (15) and for generating electric signals corresponding to traction forces withstood by each twist-lock type element (1) for locking and weighting.

9. A method for manufacturing a twist-lock type element (1) for locking and weighting according to claim 4, comprising:
procuring a solid twist-lock type element for locking having a stem (2), ending from a first end with an arrow shaped head (3) of a twist-lock type, and a locking tail (5) integral with the stem (2) and suitable for a spreader for lifting containers;
thinning a transversal section of a portion of the stem (2) near the tail (5) by working mechanically a side surface of the portion of the stem (2), in order to realize a thinned longitudinal body (8) in respect to the stem (2) and integral thereto;
fixing at least a strain gauge (15) on a wall of said longitudinal body (8) for sensing an axial traction force of the element for locking and weighting (1).

10. The method according to claim 9 for manufacturing a twist-lock type element (1) for locking and weighting according to claim 6, said method further comprising the following steps:
drilling in said locking tail (5) an axial cavity (16) opened towards the outside and configured for housing electrical connection wires;
threading into the axial cavity (16) electrical connection wires of the load cell (4).

## Patentansprüche

1. Ein twistlockartiges Element (1) zum Verriegeln und Wiegen von Containern, umfassend:
- einen Stiel (2) mit einem pfeilförmigen Kopf (3) von twistlockartiger Beschaffenheit an einem ersten Ende;
- eine Lastzelle (4), umfassend:
- einen länglichen Körper (8) mit einem ersten Ende, das an einem zweiten, dem pfeilförmigen Kopf (3) gegenüberliegenden Ende des Stiels (2) befestigt und derart ausgelegt ist, um einer maximalen Nennzugkraft zu widerstehen und sich in einem größeren Ausmaß elastisch zu dehnen als der besagte Stiel (2),
- wenigstens einen Dehnungsmessstreifen (15), der an einer Wand des besagten länglichen Körpers (8) befestigt ist, um eine axiale Zugkraft des Verriegelungs- und Wiegeelements (1) zu sensieren;
- einen für eine Lasttraverse zum Heben von Containern geeigneten, rückwärtigen Verriegelungsausläufer (5), der an einem zweiten Ende des besagten länglichen Körpers (8) gegenüber dem ersten Ende befestigt ist.

2. Das twistlockartige Verriegelungs- und Wiegeelement (1) gemäß Anspruch 1, wobei die besagte Lastzelle eine Mehrzahl von Dehnungsmeßstreifen umfasst, die an dem besagten länglichen Körper fixiert sind, um die auf das Element einwirkenden Zug- und Scherkräfte zu sensieren.

3. Das twistlockartige Verriegelungs- und Wiegeelement (1) gemäß Anspruch 1 oder 2, wobei der besagte längliche Körper ein Loch quer zu seiner Längsachse aufweist, und wobei der besagte wenigstens eine Dehnungsmessstreifen an einer Wand des besagten, quer verlaufenden Lochs befestigt ist.

4. Das twistlockartige Verriegelungs- und Wiegeelement (1) gemäß einem der Ansprüche 1 bis 3, wobei der besagte längliche Körper einen gegenüber dem Querschnitt des zylindrischen Stiels verjüngten Querschnitt aufweist, und wobei der besagte wenigstens eine Dehnungsmessstreifen an einer Seitenwand des länglichen Körpers befestigt ist.

5. Das twistlockartige Verriegelungs- und Wiegeelement (1) gemäß einem der Ansprüche 1 bis 4, umfassend eine Hülse (17), die an dem Stiel (2) und an dem rückwärtigen Verriegelungsausläufer (5) befestigt ist, um die Lastzelle (4) zu umgeben.

6. Das twistlockartige Verriegelungs- und Wiegeelement (1) gemäß einem der Ansprüche 1 bis 5, wobei der besagte rückwärtige Verriegelungsausläufer einen axialen Hohlraum (16) aufweist, der zur Außenseite hin offen sowie dazu ausgelegt ist, um die nach außen führenden, elektrischen Anschlussdrähte zu beherbergen.

7. Eine Vorrichtung zum Heben und Wiegen von Containern, umfassend:
- eine Lasttraverse mit vier oder acht Verriegelungssitzen, geeignet zum Halten der Ausleger von twistlockartigen Elementen;
- vier oder acht twistlockartige, mit ihren rückwärtigen Auslegern (5) in den jeweiligen Verriegelungssitzen der Lasttraverse fest installierte Verriegelungs- und Wiegeelemente (1) gemäß einem der Ansprüche 1 bis 6.

8. Das Vorrichtung gemäß Anspruch 7, umfassend einen Steuerschaltkreis, der mit den Dehnungsmessstreifen (15) der Lastzellen der twistlockartigen Verriegelungs- und Wiegeelemente (1) elektrisch verbunden und dazu ausgelegt ist, einen elektrischen Widerstandswert der Dehnungsmessstreifen (15) abzutasten und elektrische Signale zu erzeugen entsprechend der Zugkräfte, welchen jedes twistlockartige Verriegelungs- und Wiegeelement (1) ausgesetzt ist.

9. Ein Verfahren zur Herstellung eines twistlockartigen Elements (1) zum Verriegeln und Wiegen von Containern gemäß Anspruch 4, umfassend:
- Beschaffen eines stabilen twistlockartigen Verriegelungselements (1) mit einem Stiel (2), der sich von einem ersten Ende mit einem pfeilförmigen Kopf (3) von twistlockartiger Beschaffenheit bis zu einem rückwärtigen, mit dem Stiel (2) integrierten Verriegelungsausläufer (5) erstreckt, der für eine Lasttraverse zum Heben von Containern geeignet ist;
- Verjüngen eines Querschnitts eines Bereichs des Stiels (2) nahe dem rückwärtigen Ausläufer (5) durch mechanisches Bearbeiten einer seitlichen Oberfläche eines Bereichs des Stiels (2), um einen gegenüber dem Stiel (2) verjüngten und mit jenem integrierten, länglichen Körper (8) zu realisieren;
- Befestigen wenigstens eines Dehnungsmessstreifens (15) an der Wand des besagten länglichen Körpers (8), um eine auf das Verriegelungs- und Wiegeelement (1) einwirkende axiale Zugkraft zu sensieren.

10. Das Verfahren gemäß Anspruch 9 zur Herstellung eines twistlockartigen Elements (1) zum Verriegeln und Wiegen von Containern gemäß Anspruch 6, wobei das Verfahren ferner die folgenden Schritte umfasst:
- Bohren eines axialen, nach außen offenen Hohlraums (16), der dazu ausgelegt ist, elektrische Anschlussdrähte zu beherbergen, in den besagten, rückwärtigen Verriegelungsausläufer (5);
- Einfädeln elektrischer Anschlussrähte der Lastzelle (4) in den axialen Hohlraum (16).

## Revendications

1. Élément de type à verrou tournant (1) pour verrouiller et peser des conteneurs, comprenant :
une tige (2) ayant une première extrémité avec une tête en forme de flèche (3) d'un type à verrou tournant ;
une cellule de charge (4) comprenant :
un corps longitudinal (8) ayant une première extrémité fixée de manière coaxiale à une seconde extrémité de la tige (2) opposée à la tête en forme de flèche (3), configuré pour résister à une force de traction nominale maximale et pour s'étirer élastiquement dans une plus grande mesure que ladite tige (2),
au moins un extensomètre (15) fixé sur une paroi dudit corps longitudinal (8) afin de détecter une force de traction axiale de l'élément (1) pour le verrouillage et la pesée ;
une queue de verrouillage (5) appropriée pour un palonnier pour lever des conteneurs, fixée au niveau d'une seconde extrémité dudit corps longitudinal (8) opposée à ladite première extrémité.

2. Élément de type à verrou tournant (1) pour le verrouillage et la pesée selon la revendication 1, dans lequel ladite cellule de charge comprend une pluralité d'extensomètres fixés sur ledit corps longitudinal pour détecter les forces de traction et de cisaillement sur l'élément.

3. Élément de type à verrou tournant (1) pour le verrouillage et la pesée selon la revendication 1 ou 2, dans lequel ledit corps longitudinal a un trou transversal par rapport audit axe longitudinal, ledit au moins un extensomètre étant fixé sur une paroi dudit trou transversal.

4. Élément de type à verrou tournant (1) pour le verrouillage et la pesée selon l'une des revendications 1 à 3, dans lequel ledit corps longitudinal a une section transversale plus fine que la section transversale de la tige cylindrique, ledit au moins un extensomètre étant fixé sur une paroi latérale du corps longitudinal.

5. Élément de type à verrou tournant (1) pour le verrouillage et la pesée selon l'une des revendications 1 à 4, comprenant un tube (17) fixé sur la tige (2) et sur la queue de verrouillage (5) pour entourer la cellule de charge (4).

6. Élément de type à verrou tournant (1) pour le verrouillage et la pesée selon l'une des revendications 1 à 5, dans lequel ladite queue de verrouillage a une cavité axiale (16) ouverte vers l'extérieur et configurée pour loger des fils de connexion électriques de la cellule de charge (4) avec l'extérieur.

7. Dispositif pour lever et peser des conteneurs, comprenant :
un palonnier ayant quatre ou huit sièges de verrouillage appropriés pour maintenir les queues des éléments de type à verrou tournant ;
quatre ou huit éléments de type à verrou tournant (1) pour le verrouillage ou la pesée selon l'une des revendications 1 à 6, ayant des queues (5) fermement installées dans les sièges de verrouillage respectifs du palonnier.

8. Dispositif selon la revendication 7, comprenant un circuit de commande électriquement connecté aux extensomètres (15) des cellules de charge des éléments de type à verrou tournant (1) pour le verrouillage et la pesée, configuré pour lire une valeur de résistance électrique des extensomètres (15) et pour générer des signaux électriques correspondant aux forces de traction supportées par chaque élément de type à verrou tournant (1) pour le verrouillage et la pesée.

9. Procédé pour fabriquer un élément de type à verrou tournant (1) pour le verrouillage et la pesée selon la revendication 4, comprenant les étapes suivantes :
se procurer un élément de type à verrou tournant solide pour le verrouillage, ayant une tige (2), se terminant par une première extrémité avec une tête en forme de flèche (3) de type à verrou tournant, et une queue de verrouillage (5) solidaire avec la tige (2) et appropriée pour qu'un palonnier lève des conteneurs ;
affiner une section transversale d'une partie de la tige (2) à proximité de la queue (5) en usinant mécaniquement une surface latérale de la partie de la tige (2), afin de réaliser un corps longitudinal affiné (8) par rapport à la tige (2) et solidaire de cette dernière ;
fixer au moins un extensomètre (15) sur une paroi dudit corps longitudinal (8) pour détecter une force de traction axiale de l'élément pour le verrouillage et la pesée (1).

10. Procédé selon la revendication 9 pour fabriquer un élément de type à verrou tournant (1) pour le verrouillage et la pesée selon la revendication 6, ledit procédé comprenant en outre les étapes suivantes :
percer dans ladite queue de verrouillage (5), une cavité axiale (16) ouverte vers l'extérieur et configurée pour loger des fils de connexion électriques ;
faire passer, dans la cavité axiale (16), des fils de connexion électriques de la cellule de charge (4).
